# EUROPÄISCHE PATENTSCHRIFT

(11) **EP 1 110 298 B1**
(45) Veröffentlichungstag und Bekanntmachung des Hinweises auf die Patenterteilung: **02.11.2005**
(21) Anmeldenummer: 99944443.3
(22) Anmeldetag: 19.08.1999
(51) Int. Cl.: H02K 16/04, H02K 1/27, H02K 1/20, H02K 5/20, H02K 9/197

(54) **ELEKTRISCHE MASCHINE MIT DAUERMAGNETEN**
ELECTRICAL MACHINE WITH PERMANENT MAGNETS
MACHINE ELECTRIQUE A AIMANTS PERMANENTS

(30) Priorität: 24.08.1998 DE 19838378
(43) Veröffentlichungstag der Anmeldung: 27.06.2001
(73) Patentinhaber: MAGNET-MOTOR GESELLSCHAFT FÜR MAGNETMOTORISCHE TECHNIK MBH, 82319 Starnberg (DE)
(72) Erfinder: EHRHART, Peter, D-81375 München (DE); LUCAS, Christian, D-82166 Gräfelfing (DE)
(74) Vertreter: Klunker . Schmitt-Nilson . Hirsch
(86) Internationale Anmeldenummer: PCT/EP1999/006082
(87) Internationale Veröffentlichungsnummer: WO 2000/011777

(56) Entgegenhaltungen:
- WO-A-92/20131
- DE-A- 3 915 526
- FR-A- 2 606 951

## Beschreibung

Gegenstand der Erfindung ist eine elektrische Maschine mit folgenden Merkmalen:
(a) ein äußerer, erster Statorteil und ein innerer, zweiter Statorteil, wobei die zwei Statorteile koaxial angeordnet und mit einem Zwischenraum radial voneinander beabstandet sind;
(b) jeder Statorteil weist, dem Zwischenraum zugewandt, eine umfangsmäßige Reihe von Statorpolen auf, von denen mindestens eine Teilanzahl bewickelt ist;
(c) ein Rotorteil, das in dem Zwischenraum angeordnet ist;
(d) der Rotorteil weist eine umfangsmäßige Reihe von in Umfangsrichtung magnetisierten Dauermagneten und von Magnetfluß-Leitstücken in abwechselnder Folge auf;
(e) die - in Umfangsrichtung gemessene - Breite der Dauermagnete ist auf mittlerem Radius des Rotorteils größer als radial außen und radial innen an dem Rotorteil, und die - in Umfangsrichtung gemessene - Breite der Magnetfluß-Leitstücke ist entsprechend auf mittlerem Radius des Rotorteils kleiner als radial außen und radial innen an dem Rotorteil;
(f) eine erste umfangsmäßige Reihe von Magnetkreisen, die jeweils - in einer Ebene rechtwinklig zur Rotorachse betrachtet - durch zwei einander benachbarte Statorpole des ersten Statorteils in der betrachteten Ebene und durch zwei einander benachbarte Magnetfluß-Leitstücke des Rotorteils in der betrachteten Ebene und durch den Dauermagneten zwischen den zwei einander benachbarten Magnetfluß-Leitstücken in der betrachteten Ebene führen, und eine zweite umfangsmäßige Reihe von Magnetkreisen, die jeweils - in einer Ebene rechtwinklig zur Rotorachse betrachtet - durch zwei einander benachbarte Statorpole des zweiten Statorteils in der betrachteten Ebene und durch zwei einander benachbarte Magnetfluß-Leitstücke des Rotorteils in der betrachteten Ebene und durch den Dauermagneten zwischen den zwei einander benachbarten Magnetfluß-Leitstücken in der betrachteten Ebene führen,
   dadurch gekennzeichnt,
(g) daß die Magnetfluß-Leitstücke und/oder die Dauermagnete in Richtung der Rotorachse in mehrere, elektrisch voneinander isolierte Abschnitte unterteilt sind.

Eine elektrische Maschine mit den Merkmalen (a) bis (f) ist aus FR 2 606 951 A bekannt.

Durch das Merkmal (g) werden die Wirbelstromverluste der elektrischen Maschine reduziert. ßei der erfindungsgemäßen elektrischen Maschine sind zwei umfangsmäßig verlaufende Luftspalte mit radialem Abstand vorhanden.

Die erfindungsgemäße elektrische Maschine zeichnet sich durch eine sehr hohe Leistungsdichte aus. Dies resultiert aus dem Vorhandensein von zwei Statorteilen und einem gemeinsamen Rotorteil dazwischen, aber auch aus der angegebenen Geometrie der Magnetfluß-Leitstücke und der Dauermagnete. Außerdem ist der gegenseitige "Selbstverankerungseffekt" der Bestandteile des Rotorteils hervorzuheben.

Erfindungsgemäße elektrische Maschinen können insbesondere Maschinen sein, die mechanische Leistung abgeben (d.h. Elektromotoren), oder Maschinen sein, die mechanische Leistung aufnehmen (d.h. Generatoren). Es handelt sich vorzugsweise um elektronisch kommutierte Elektromotoren oder um Generatoren mit Entnahme elektrischer Leistung über aktive Stromrichter.

Vorzugsweise ist die genannte Breite der Magnetfluß-Leitstücke radial innen am Rotorteil und radial außen am Rotorteil jeweils kleiner als die radiale Abmessung des betreffenden Magnetfluß-Leitstücks. Diese Maßnahme führt dazu, daß der Rotorteil nach dem Prinzip der Magnetflußkonzentration ausgebildet ist, also am Austritt der Magnetfluß-Leitstücke in den betreffenden Luftspalt eine höhere Magnetflußdichte herrscht als in dem betreffenden magnetflußerzeugenden Dauermagneten.

Vorzugsweise ist der Rotorteil Bestandteil eines becherförmig ausgebildeten Bereichs des Rotors. In diesem Fall läßt sich der Rotor mit Lagerung nur an einer Axialseite der Maschine ausbilden, was für viele Einsatzfelder praktische Vorteile erbringt.

Vorzugsweise weist der becherförmig ausgebildete Bereich des Rotors eine Rotor-Basiswand auf und ist der Rotorteil mittels über den Umfang verteilter Zuganker an der Basiswand befestigt, wobei die Zuganker zum einen an der Basiswand befestigt sind und zum anderen durch Bohrungen in den Magnetfluß-Leitstücken und/oder in den Dauermagneten gehen. Diese Befestigung durch Zuganker ist produktionstechnisch besonders günstig. Es wird darauf hingewiesen, daß es aufgrund der angesprochenen Geometrie der Dauermagnete und der Magnetfluß-Leitstücke im Grundsatz ausreichend ist, nur entweder die Magnetfluß-Leitstücke oder die Dauermagnete unmittelbar durch die Zuganker festzulegen, weil die jeweils anderen Bestandteile Dauermagnete/Magnetfluß-Leitstücke indirekt über Formschluß gehalten werden. Andererseits ist es durchaus möglich, beide Bestandteile, d.h. Dauermagnete und Magnetfluß-Leitstücke, jeweils mit Zugankern an der Rotor-Basiswand zu befestigen.

Die Abschnitte der Magnetfluß-Leitstücke und/oder der Dauermagnete können vorzugsweise untereinander verklebt sein und/oder durch Zuganker zusammengehalten sein.

Vorzugsweise sind die Magnetfluß-Leitstücke und die Dauermagnete in Richtung der Rotorachse in mehrere Abschnitte unterteilt, die durch Zwischenringe aus magnetisch nicht-leitendem Material getrennt sind, das am besten auch elektrisch nicht-leitend ist. Mittels dieses Aufbaus lassen sich Rotorteile mit erhöhter mechanischer Festigkeit bauen. Jeweils zwischen den Zwischenringen können die Magnetfluß-Leitstücke und/oder die Dauermagnete nochmals feiner in elektrisch voneinander isolierte Unterabschnitte unterteilt sein. In bestimmten Ausführungfällen kann es günstig sein, Magnetfluß-Leitstück-Abschnitte und/oder Dauermagent-Abschnitte, insbesondere wenn diese nicht unmittelbar von Zugankern gehalten sind, mit den Zwischenringen zu verkleben.

Vorzugsweise haben die Zwischenringe einen kleineren Außendurchmesser als die Magnetfluß-Leitstücke und die Dauermagnete und/oder einen größeren Innendurchmesser als die Magnetfluß-Leitstücke und die Dauermagnete. Dies führt zu verklebungstechnischen Vorteilen und zu einer besseren Gestaltung der Innen- und Außenfläche des Rotorteils.

Vorzugsweise ist der Rotorteil außenseitig mit einer umfangsmäßigen Festigungsbandage versehen, die vorzugsweise eine Dicke von weniger als 1,5 mm hat. Die Festigungsbandage kann den Aufbau des Rotorteils von einem erheblichen Teil der auftretenden Fliehkräfte entlasten. Da sich die Festigungsbandage im radial äußeren Luftspalt befindet, sollte ihre Dicke möglichst klein sein. Ein bevorzugtes Material für die Festigungsbandage ist mit Kohlefasern verstärkter Kunststoff.

Vorzugsweise ist die Anzahl der Statorpole am ersten Statorteil gleich der Anzahl der Statorpole am zweiten Statorteil. Außerdem ist in diesem Zusammenhang bevorzugt, daß jedem Statorpol am ersten Statorteil jenseits des Rotorteils ein Statorpol am zweiten Statorteil mit gleicher elektromagnetischer Phasenlage gegenüberliegt, wenn man sich entlang eines Radius nach innen bewegt. Diese Maßnahmen führen zu bester Magnetflußausnutzung und zu einer wünschenswerten Symmetrie der magnetischen Flüsse.

Vorzugsweise ist der erste Statorteil und/oder der zweite Statorteil mit einer direkten Kühlung durch Fluidströmung entlang der Wicklungen ausgestattet; vorzugsweise ist der erste Statorteil und/oder der zweite Statorteil mit einer Statorrückenkühlung ausgestattet. Bei der direkten Kühlung durch Fluidströmung schließt man vorzugsweise die die Statorpolenden enthaltende Fläche z.B. durch ein Schließelement, wie eine kräftige Folie, allseitig fluiddicht ab. Dann kann man die zu einem erheblichen Teil durch Wicklungsdrähte gefüllten Kanäle jeweils zwischen zwei benachbarten Statorpolen mit einem Kühlfluid durchströmen. Alternativ oder zusätzlich kann man Kühlfluidkanäle in den Statorpolen vorsehen. Als Kühlfluid eignen sich in erster Linie Flüssigkeiten, alternativ sind aber auch gasförmige Kühlmedien möglich. - Die weitere bevorzugte Möglichkeit ist die mehr indirekte Statorrückenkühlung, insbesondere mit Kühlfluidkanälen für flüssiges oder gasförmiges Kühlfluid im oder am Statorrücken. Man kann aber auch die luftspaltabgewandte Oberfläche des Statorrückens mit Kühlflüssigkeit oder mit gasförmigen Kühlfluid kühlen. - Ganz besonders bevorzugt ist eine Ausbildung mit direkter Flüssigkeitskühlung entlang der Wicklungen beim zweiten Statorteil und mit Statorrückenkühlung beim ersten Statorteil.

Vorzugsweise sind der erste Statorteil und der zweite Statorteil an einer gemeinsamen Stator-Basiswand befestigt, wobei man häufig überhaupt kein geschlossenes Gehäuse im konventionellen Sinn mehr benötigt. An oder auch in der Stator-Basiswand kann man vorzugsweise eine Kühlmittelversorgung sowie elektrische Leistungs- und Steuerleitungen anbringen, gewünschtenfalls auch noch die für den Betrieb der Maschine vorgesehene Elektronik.

Nach einer alternativen Ausbildung sind vorzugsweise der erste Statorteil und der zweite Statorteil jeder für sich an dem tragenden Bestandteil der Maschine, vorzugsweise dem Maschinengehäuse, befestigt.

Vorzugsweise ist vorgesehen, daß mindestens eine aktive Wechselrichterelektronik an die Wicklungen der Maschine angeschlossen ist. Im Fall des Elektromotors leistet die Wechselrichterelektronik die elektronischen Kommutierungen der Spulenströme und gegebenenfalls die Leistungsregelung und gegebenenfalls die Drehzahlregelung des Elektromotors.

Im Fall des Stromgenerators sieht man vorzugsweise eine an die Wicklungen der Maschine angeschlossene Gleichrichtereinrichtung vor, um mit dem Stromgenerator Gleichstrom zu erzeugen. Im einfachsten Fall kann es sich um einen passiven Gleichrichter handeln. Mehr bevorzugt ist ein gesteuerter Gleichrichter, der z. B. nach dem Prinzip der Phasenanschnittsteuerung arbeitet. Am meisten bevorzugt sind aktive Gleichrichter. Diese können elektronisch wie Wechselrichter aufgebaut sein. Sie können die Funktion haben, eine einstellbare Spannung zu liefern, und/oder die Funktion haben, eine im wesentlichen drehzahlunabhängige Spannung zu liefern.

Die Erfindung und bevorzugte Weiterbildungen der Erfindung werden nachfolgend anhand schematisiert zeichnerisch dargestellter Ausführungsbeispiele noch näher erläutert. Es zeigt:
- Fig. 1: in einem Querschnitt rechtwinklig zur Rotorachse einen Teil einer elektrischen Maschine erster Ausführungsform;
- Fig. 2: in einem Achsenschnitt einen Teil einer elektrischen Maschine zweiter Ausführungsform, zur Veranschaulichung der Befestigung des Rotorteils;
- Fig. 3: in einem Achsenschnitt einen Teil einer elektrischen Maschine dritter Ausführungsform, zur Veranschaulichung des grundsätzlichen Gesamtaufbaus;
- Fig. 4: in einem Achsenschnitt einen Teil einer elektrischen Maschine vierter Ausführungsform, zur Veranschaulichung des grundsätzlichen Aufbaus
- Fig. 5: in einem Querschnitt rechtwinklig zur Rotorachse einen Teil einer elektrischen Maschine, die ähnlich wie die erste Ausführungsform gemäß Fig. 1 aufgebaut ist, aber jetzt zur Veran- schaulichung der Kühlungseinrichtungen.

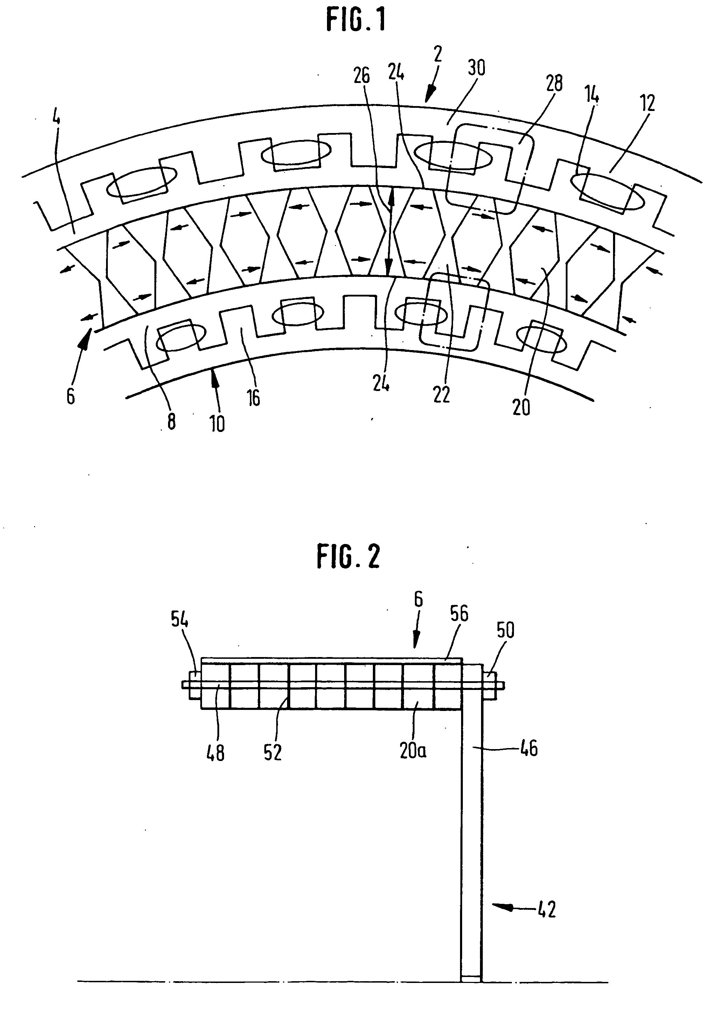

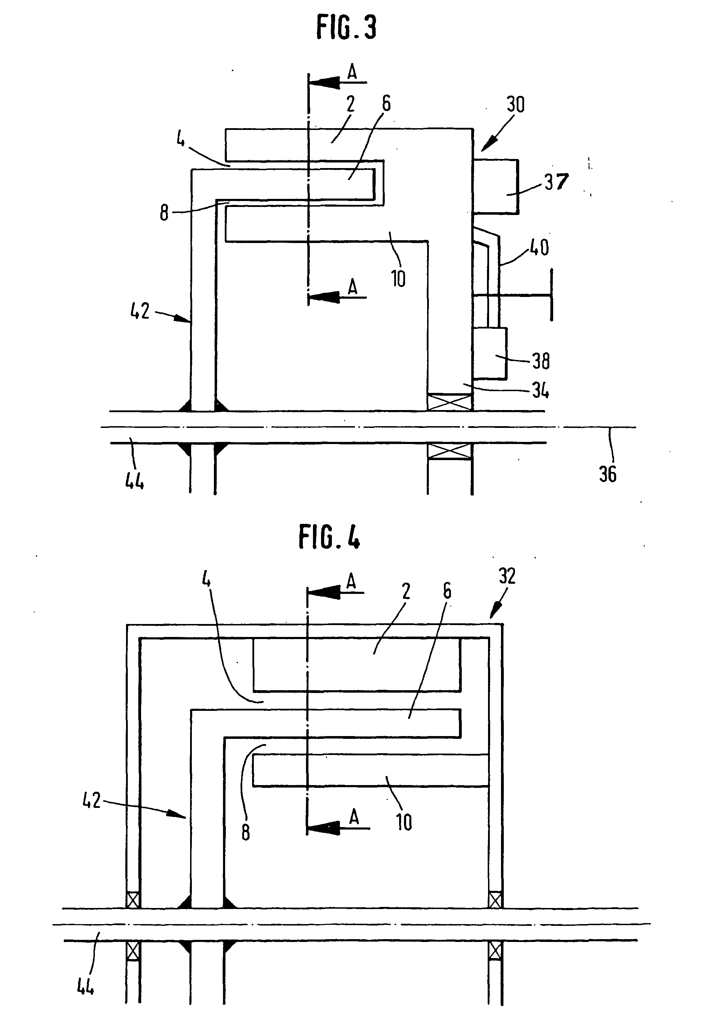

In Fig. 1 erkennt man einen radial äußeren, ersten Statorteil 2, radial innen davon und durch einen ersten, im wesentlichen zylindrischen Luftspalt 4 davon getrennt einen ringförmigen Rotorteil 6, und radial innerhalb davon und durch einen zweiten, im wesentlichen zylindrischen Luftspalt 8 davon getrennt einen radial inneren, zweiten Statorteil 10. Wie sich die beschriebenen Bestandteile der Maschine in den Gesamtaufbau der Maschine einfügen, wird bei der Beschreibung der Fig. 3 und 4 weiter unten noch deutlicher werden.

Der erste Statorteil 2 ist mit einer umfangsmäßigen Reihe von voneinander beabstandeten Statorpolen 12 ausgestattet, die nach radial innen hin zu dem ersten Luftspalt 4 weisen. Jeder zweite dieser Statorpole 12 ist mit einer Kupferdrahtwicklung 14 bewickelt. Der zweite Statorteil 10 ist ganz analog mit Statorpolen 16 und Wicklungen 18 ausgebildet, wobei die Statorpole 16 allerdings nach radial außen zum zweiten Luftspalt 8 weisen.

In dem Zwischenraum zwischen dem ersten Statorteil 2 und dem zweiten Statorteil 10 befindet sich der Rotorteil 6, der insgesamt im wesentlichen die Gestalt eines Hohlzylinders hat. Der Rotorteil 6 ist aufgebaut aus Dauermagneten 20, die jeweils einen rautenartigen Querschnitt (zwei Trapeze mit der längeren Grundseite aneinandergesetzt) haben, und Magnetfluß-Leitstücken 22, die jeweils einen X-förmigen Querschnitt (zwei mit ihren kurzen Grundseiten aneinandergesetzte Trapeze) haben. Dauermagnete 20 und Leitstücke 22 wechseln regelmäßig miteinander ab. Die Dauermagnete 20 sind in Umfangsrichtung magnetisiert, wie mit Pfeilen angedeutet, und zwar abwechselnd von Nord nach Süd im Uhrzeigersinn und von Nord nach Süd gegen den Uhrzeigersinn. Man erkennt, daß die Magnetfluß-Austrittsfläche 24 jedes betrachteten Leitstücks 22 zum ersten Luftspalt 4 bzw. zum zweiten Luftspalt 8 - in Umfangsrichtung gemessen - eine geringere Breite als die - in Radialrichtung gemessene - Abmessung 26 des betrachteten Leitstücks 22 bzw. eines benachbarten Dauermagneten 20 hat, so daß an der Magnetfluß-Austrittsfläche 24 eine höhere Magnetflußdichte als in den Dauermagneten 20 herrscht. Der erste Luftspalt 4 befindet sich zwischen der im wesentlichen zylindrischen, radial inneren Begrenzungsfläche des ersten Statorteils 2 und der im wesentlichen zylinderischen, radial äußeren Begrenzungsfläche des Rotorteils 6. Der zweite Luftspalt 8 befindet sich zwischen der im wesentlichen zylindrischen, radial inneren Begrenzungsfläche des Rotorteils 6 und der im wesentlichen zylindrischen, radial äußeren Begrenzungsfläche des zweiten Statorteils 10.

Außerdem sind in Fig. 1 einige der Magnetkreise 28 eingezeichnet, die letztlich die Funktion der Maschine bewirken. Bezogen auf den ersten Luftspalt 4 sieht man, daß in der betrachteten Querschnittsebene der Maschine (das ist die Zeichnungsebene der Fig. 1) jeder Magnetkreis durch einen radial äußeren Statorpol 12, durch ein Stück des Statorrückens 30 zwischen zwei Statorpolen 12, durch einen umfangsmäßig benachbarten, radial äußeren Statorpol 12, über den ersten Luftspalt 4 hinweg, durch ein Leitstück 22, durch einen in Umfangsrichtung anschließenden Dauermagneten 20, durch ein anschließendes Flußleitstück 22, und über den ersten Luftspalt 4 hinweg zurück zu dem Ausgangs-Statorpol 12 führt. Bei dem zweiten Luftspalt 8 sind die Verhältnisse ganz analog, wobei hier nur die radial inneren Statorpole 16 an die Stelle der radial äußeren Statorpole 12 treten.

Anhand der Fig. 3 und 4 kann man sich besser vorstellen, wie die beschriebenen Maschinenbestandteile (erster Statorteil 2, Rotorteil 6, zweiter Statorteil 10) in den Gesamtaufbau der Maschine eingegliedert sind. Jeweils mit der Schnittangabe A-A ist angegeben, wie man sich eine Schnittführung, die zu der Fig. 1 führt, vorstellen kann. Der erste Statorteil 2 und der zweite Statorteil 10 sind Bestandteil des (gesamten) Stators 30, der bei der Ausführungsform von Fig. 3 - grob gesprochen - insgesamt becherförmig ist und der bei der Ausführungsform gemäß Fig. 4 in einem im wesentlichen zylindrischen Gehäuse 32 mit hohlzylindrischem Fortsatz von einer der zwei Gehäusestirnwände ausgebildet ist. Bei der Ausführungsform gemäß Fig. 3 sind der erste Statorteil 2 und der zweite Statorteil 10 an einer gemeinsamen Stator-Basiswand 34 befestigt, die rechtwinklig zur Rotorachse 36 verläuft. Die Stator-Basiswand 34 trägt, schematisch angedeutet, an ihrer Außenseite eine Kühlmittelversorgung 37, Elektronik 38 für den Betrieb der Maschine, und elektrische Leistungs- und Steuerleitungen 40, insbesondere zwischen der Elektronik 38 und den Wicklungen 14 der Statorpole 12 und 16. Sowohl bei der Ausführungsform gemäß Fig. 3 als auch bei der Ausführungsform gemäß Fig. 4 ist der Rotorteil 6 Bestandteil eines - grob gesprochen - becherförmigen Rotors 42, der drehfest mit einer Welle 44 verbunden ist. Die Welle 44 ist in dem Stator 30 bzw. dem Gehäuse 32 drehbar gelagert.

In Fig. 2 ist eine der bevorzugten Möglichkeiten veranschaulicht, wie man den Rotorteil 6 an einer Rotor-Basiswand 46 eines insgesamt - grob gesprochen - becherförmigen Rotors 42 befestigen kann. Längs des Umfangs verteilt sind eine Vielzahl von Zugankern 48. vorgesehen, z. B. in Form von Gewindebolzen. Am einen Ende ist der betrachtete Zuganker 48 durch eine Bohrung in der Rotor-Basiswand 46 gesteckt, und dort ist eine erste Mutter 50 aufgeschraubt. Der Zuganker 48 verläuft in Axialrichtung und durchsetzt in Bohrungen eine ganze Reihe von Dauermagnet-Abschnitten 20a und/oder eine ganze Reihe von Leitstück-Abschnitten, wobei zwischen benachbarten Dauermagnet-Abschnitten 20a und zwischen benachbarten Leitstück-Abschnitten jeweils ein Zwischenring 52 aus magnetisch nichtleitendem Material vorgesehen ist, jeweils ebenfalls mit Bohrung, die von dem Zuganker 48 durchsetzt wird. An dem Ende des Zugankers 48, das der Rotor-Basiswand 46 entfernt ist, ist eine weitere Mutter 54 aufgeschraubt, die das ganze "Paket" von Dauermagnet-Abschnitten 20a und Zwischenringen 52 bzw. von Leitstück-Abschnitten und Zwischenringen 52 zusammenspannt und gegen die Rotor-Basiswand 46 spannt. Es versteht sich, daß pro betrachteter Zeichnungsebene auch mehrere Zuganker 48 mit radialem Abstand vorgesehen sein können.

In Fig. 2 erkennt man ferner die Möglichkeit, auf der radial äußeren Begrenzungsfläche des Läuferteils 6 eine Festigungsbandage 56 anzubringen, die wie ein Zusammenspannring wirkt und so einen Teil der Kräfte aufnimmt, die durch die Fliehkraft auf die Dauermagnete 20 und die Leitstücke 22 kommen.

Nochmals zurückkommend auf Fig. 1 sieht man, daß durch die Geometrie der Dauermagnete 20 und der Leitstücke 22 eine gegenseitige "Selbstverankerung" dieser Bauteile erreicht wird. Wenn entweder die Dauermagnete 20 oder die Leitstücke 22 in radialer Richtung fixiert sind, können sich die jeweils anderen Bestandteile nicht unter der Wirkung der Fliehkraft und unter der Wirkung der magnetischen Anziehungskräfte im ersten Luftspalt 4 radial nach außen oder radial nach innen bewegen.

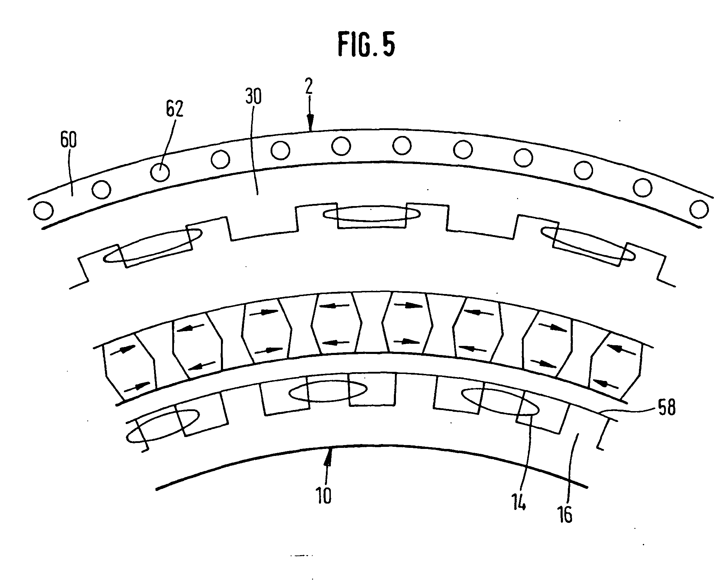

Die Fig. 5 entspricht weitgehend der Fig. 1, wobei jetzt allerdings noch Elemente der Kühlung der Maschine mit eingezeichnet sind. Beim zweiten Statorteil 10 ist an der radial äußeren Begrenzungsfläche, gleichsam über die Enden der Statorpole 16, ein Schließelement 58 gelegt, z. B. in Form einer faserverstärkten, kräftigen Kunststoffolie. Durch das Schließelement 58 werden die Nuten zwischen jeweils benachbarten Statorpolen 16 nach außen hin abgeschlossen, so daß man jetzt - eine nicht eingezeichnete axiale Abdichtung vorausgesetzt - durch die teilweise mit dem Draht der Bewicklung 14 ausgefüllten Nuten eine Kühlflüssigkeit pumpen oder ein Kühlgas blasen kann. Normalerweise ist es jedoch ausreichend, die Wickelköpfe der Spulen, den aus dem Statorteil herausragenden Teil der Wicklungen, wie beschrieben direkt zu kühlen. Auf diese Weise läßt sich eine direkte Wicklungskühlung erreichen, die natürlich auch eine Kühlung des Statormaterials mit sich bringt.

Beim ersten Statorteil 2 ist eine indirekte Kühlung durch Kühlung des Statorrückens 30 eingezeichnet. Auf die radial äußere, im wesentlichen zylindrische Abschlußfläche des ersten Statorteils 2 ist eine Kühlungsschicht 60 aufgebracht, die Kanäle 62 zum Hindurchpumpen von Kühlflüssigkeit enthält. Alternativ könnte man auch die Kühlkanäle 62 unmittelbar in das Statormaterial bohren wie an zwei Stellen in gestrichelten Linien angedeutet. Eine weitere Variante wäre die äußere Verrippung des ersten Statorteils 2 und dortige Luftkühlung.

## Patentansprüche

1. Elektrische Maschine mit folgenden Merkmalen:
(a) ein äußerer, erster Statorteil (2) und ein innerer, zweiter Statorteil (10), wobei die zwei Statorteile (2;10) koaxial angeordnet und mit einem Zwischenraum radial voneinander beabstandet sind;
(b) jeder Statorteil (2;10) weist, dem Zwischenraum zugewandt, eine umfangsmäßige Reihe von Statorpolen (16) auf, von denen mindestens eine Teilanzahl bewickelt ist;
(c) ein Rotorteil (6), das in dem Zwischenraum angeordnet ist;
(d) der Rotorteil (6) weist eine umfangsmäßige Reihe von in Umfangsrichtung magnetisierten Dauermagneten (20) und von Magnetfluß-Leitstücken (22) in abwechselnder Folge auf;
(e) die - in Umfangsrichtung gemessene - Breite der Dauermagnete (20) ist auf mittlerem Radius des Rotorteils (6) größer als radial außen und radial innen an dem Rotorteil (6), und die - in Umfangsrichtung gemessene - Breite der Magnetfluß-Leitstücke (22) ist entsprechend auf mittlerem Radius des Rotorteils (6) kleiner als radial außen und radial innen an dem Rotorteil (6);
(f) eine erste umfangsmäßige Reihe von Magnetkreisen, die jeweils - in einer Ebene rechtwinklig zur Rotorachse (36) betrachtet - durch zwei einander benachbarte Statorpole (16) des ersten Statorteils (2) in der betrachteten Ebene und durch zwei einander benachbarte Magnetfluß-Leitstücke (22) des Rotorteils (6) in der betrachteten Ebene und durch den Dauermagneten (20) zwischen den zwei einander benachbarten Magnetfluß-Leitstücken (22) in der betrachteten Ebene führen, und eine zweite umfangsmäßige Reihe von Magnetkreisen, die jeweils - in einer Ebene rechtwinklig zur Rotorachse (36) betrachtet - durch zwei einander benachbarte Statorpole (16) des zweiten Statorteils (10) in der betrachteten Ebene und durch zwei einander benachbarte Magnetfluß-Leitstücke (22) des Rotorteils (6) in der betrachteten Ebene und durch den Dauermagneten (20) zwischen den zwei einander benachbarten Magnetfluß-Leitstücken (22) in der betrachteten Ebene führen,
**dadurch gekennzeichnet**,
(g) **daß** die Magnetfluß-Leitstücke (22) und/oder die Dauermagnete (20) in Richtung der Rotorachse (36) in mehrere, elektrisch voneinander isolierte Abschnitte (20a) unterteilt sind.

2. Elektrische Maschine nach Anspruch 1,
**dadurch gekennzeichnet, daß** die genannte Breite der Magnetfluß-Leitstücke (22) radial innen am Rotorteil (6) und radial außen am Rotorteil (6) jeweils kleiner ist als die radiale Abmessung (26) des betreffenden Magnetfluß-Leitstücks (22).

3. Elektrische Maschine nach Anspruch 1 oder 2,
**dadurch gekennzeichnet, daß** der Rotorteil (6) Bestandteil eines becherförmig ausgebildeten Bereichs des Rotors (42) ist.

4. Elektrische Maschine nach Anspruch 3,
**dadurch gekennzeichnet, daß** der becherförmig ausgebildete Bereich des Rotors (42) eine Rotor-Basiswand (46) aufweist und daß der Rotorteil (6) mittels über den Umfang verteilter Zuganker (48) an der Basiswand (46) befestigt ist, wobei die Zuganker (48) zum einen an der Basiswand (46) befestigt und zum anderen durch Bohrungen in den Magnetfluß-Leitstücken (22) und /oder in den Dauermagneten (20) gehen.

5. Elektrische Maschine nach einem der Ansprüche 1 bis 4,
**dadurch gekennzeichnet, daß** die Abschnitte (20a) der Magnetfluß-Leitstücke (22) und/oder der Dauermagnete (20) untereinander verklebt sind und/oder durch Zuganker (48) zusammengehalten sind.

6. Elektrische Maschine nach einem der Ansprüche 1 bis 5,
**dadurch gekennzeichnet, daß** die Magnetfluß-Leitstücke (22) und die Dauermagnete (20) in Richtung der Rotorachse (36) in mehrere Abschnitte (20a) unterteilt sind, die durch Zwischenringe (52) aus magnetisch nichtleitendem Material getrennt sind.

7. Elektrische Maschine nach Anspruch 6,
**dadurch gekennzeichnet, daß** die Zwischenringe (52) einen kleineren Außendurchmesser als die Magnetfluß-Leitstücke (22) und die Dauermagnete (20) und/oder einen größeren Innendurchmesser als die Magnetfluß-Leitstücke (22) und die Dauermagnete (20) haben.

8. Elektrische Maschine nach einem der Ansprüche 1 bis 7,
**dadurch gekennzeichnet, daß** der Rotorteil (6) außenseitig mit einer umfangsmäßigen Festigungsbandage (56), die vorzugsweise eine Dicke von weniger als 1,5 mm hat, versehen ist.

9. Elektrische Maschine nach einem der Ansprüche 1 bis 8,
**dadurch gekennzeichnet, daß** die Anzahl der Statorpole (16) am ersten Statorteil (2) und die Anzahl der Statorpole (16) am zweiten Statorteil (10) gleich sind.

10. Elektrische Maschine nach einem der Ansprüche 1 bis 9,
**dadurch gekennzeichnet, daß** jedem Statorpol (16) am ersten Statorteil (2) jenseits des Rotorteils (6) ein Statorpol (16) am zweiten Statorteil (10) mit gleicher elektromagnetischer Phasenlage gegenüberliegt, wenn man sich entlang eines Radius nach innen bewegt.

11. Elektrische Maschine nach einem der Ansprüche 1 bis 10,
**dadurch gekennzeichnet, daß** der erste Statorteil (2) und/oder der zweite Statorteil (10) mit einer direkten Kühlung durch Fluidströmung entlang der Wicklungen (14) ausgestattet ist.

12. Elektrische Maschine nach einem der Ansprüche 1 bis 11,
**dadurch gekennzeichnet, daß** der erste Statorteil (2) und/oder der zweite Statorteil (10) mit einer Statorrückenkühlung (60,62) ausgestattet ist.

13. Elektrische Maschine nach einem der Ansprüche 1 bis 12,
**dadurch gekennzeichnet, daß** der erste Statorteil (2) und der zweite Statorteil (10) an einer gemeinsamen Stator-Basiswand (34) befestigt sind.

14. Elektrische Maschine nach Anspruch 13,
**dadurch gekennzeichnet, daß** an der Stator-Basiswand (34) eine Kühlmittelversorgung (37) sowie elektrische Leistungs- und Steuerleitungen (40) angebracht sind.

15. Elektrische Maschine nach einem der Ansprüche 1 bis 12,
**dadurch gekennzeichnet, daß** der erste Statorteil (2) und der zweite Statorteil (10) jeder für sich an dem tragenden Bestandteil der Maschine befestigt sind.

16. Elektrische Maschine nach einem der Ansprüche 1 bis 15,
**dadurch gekennzeichnet, daß** mindestens eine aktive Wechselrichterelektronik an die Wicklungen (14) der Maschine angeschlossen ist.

## Claims

1. An electric machine comprising the following features:
(a) an outer, first stator part (2) and an inner, second stator part (10), the two stator parts (2; 10) being coaxial and being radially spaced apart by an intermediate space;
(b) each stator part (2; 10) has, facing the intermediate space, a circumferential series of stator poles (16), at least a partial number of which carries a winding;
(c) a rotor part (6) disposed in the intermediate space;
(d) the rotor part (6) has a circumferential series of alternating permanent magnets (20) and magnetic flux conducting pieces (22), said permanent magnets being magnetized in circumferential direction;
(e) the width of the permanent magnets (20) - measured in circumferential direction - is larger on the central radius of the rotor part (6) than radially outside and radially inside on the rotor part (6) and the width of the magnetic flux conducting pieces (22) - measured in circumferential direction - is correspondingly smaller on the central radius of the rotor part (6) than radially outside and radially inside on the rotor part (6);
(f) a first circumferential series of magnetic circuits which - as seen in a plane perpendicular to the rotor axis (36) - each extend through two adjacent stator poles (16) of the first stator part (2) in the plane considered and through two adjacent magnetic flux conducting pieces (22) of the rotor part (6) in the plane considered and through the permanent magnet (20) between the two adjacent magnetic flux conducting pieces (22) in the plane considered, and a second circumferential series of magnetic circuits which - as seen in a plane perpendicular to the rotor axis (36) - extend through two adjacent stator poles (16) of the second stator part (10) in the plane considered and through two adjacent magnetic flux conducting pieces (22) of the rotor part (6) in the plane considered as well as through the permanent magnet (20) between the two adjacent magnetic flux conducting pieces (22) in the plane considered,
**characterized in**
(g) **that** the magnetic flux conducting pieces (22) and/or the permanent magnets (20), in the direction of the rotor axis (36), are subdivided into a plurality of electrically isolated sections (20a).

2. An electric machine according to claim 1,
**characterized in that** the said width of the magnetic flux conducting pieces (22) radially inside on the rotor part (6) and radially outside on the rotor part (6) each is smaller than the radial dimension (26) of the particular magnetic flux conducting piece (22).

3. An electric machine according to claim 1,
**characterized in that** the rotor part (6) is part of a portion of the rotor (42) of cup-shaped configuration.

4. An electric machine according to claim 3,
**characterized in that** the cup-shaped portion of the rotor (42) has a rotor base wall (46) and **in that** the rotor part (6) is secured to the base wall (46) by means of circumferentially distributed tie rods (48), the tie rods (48) being secured on the one hand to the base wall (46) and on the other hand extending through bores in the magnetic flux conducting pieces (22) and/or in the permanent magnets (20).

5. An electric machine according to claim 1,
**characterized in that** the sections (20a) of the magnetic flux conducting pieces (22) and/or of the permanent magnets (20), are adhesively joined together and/or held together by tie rods (48).

6. An electric machine according to claim 1,
**characterized in that** the magnetic flux conducting pieces (22) and the permanent magnets (20), in the direction of the rotor axis (36), are subdivided into several sections (20a) that are separated by intermediate rings (52) of magnetically non-conducting material.

7. An electric machine according to claim 6,
**characterized in that** the intermediate rings (52) are of smaller outer diameter than the magnetic flux conducting pieces (22) and the permanent magnets (20) and/or larger inner diameter than the magnetic flux conducting pieces (22) and the permanent magnets (20).

8. An electric machine according to claim 1,
**characterized in that** the rotor part (6) is provided on the outside thereof with a circumferential strengthening bandage (56) having preferably a thickness of less than 1.5 mm.

9. An electric machine according to claim 1,
**characterized in that** the number of stator poles (16) on the first stator part (2) and the number of stator poles (16) on the second stator part (10) are equal.

10. An electric machine according to claim 1,
**characterized in that** each stator pole (16) on the first stator part (6) has located opposite thereto, beyond the rotor part, a stator pole (16) on the second stator part (10) with the same electromagnetic phase position, when one moves inwardly along a radius.

11. An electric machine according to claim 1,
**characterized in that** the first stator part (2) and/or the second stator part (10) is provided with direct cooling by fluid flow along the windings (14).

12. An electric machine according to claim 1,
**characterized in that** the first stator part (2) and/or the second stator part (10) is provided with stator back cooling (60, 62).

13. An electric machine according to claim 1,
**characterized in that** the first stator part (2) and the second stator part (10) are mounted on a common stator base wall (34).

14. An electric machine according to claim 13,
**characterized in that** the stator base wall (34) has attached thereto a coolant supply (37) as well as electric power and control lines (40).

15. An electric machine according to claim 1,
**characterized in that** the first stator part (2) and the second stator part (10) are each mounted separately on the supporting component part of the machine.

16. An electric machine according to claim 1,
**characterized in that** at least one active inverter electronics system is connected to the windings (14) of the machine.

## Revendications

1. Machine électrique présentant les caractéristiques suivantes :
(a) une première partie de stator (2) extérieure et une seconde partie de stator (10) intérieure, les deux parties de stator (2 ; 10) étant disposées sur le même axe et étant espacées radialement l'une de l'autre d'un espace intermédiaire ;
(b) chaque partie de stator (2 ; 10) présente, tournée vers l'espace intermédiaire, une série périphérique de pôles de stator (16), dont au moins un nombre partiel est enroulé ;
(c) une partie de rotor (6), qui est disposée dans l'espace intermédiaire ;
(d) la partie de rotor (6) présente une série périphérique d'aimants permanents (20) magnétisés dans le sens périphérique et de pièces conductrices de flux magnétique (22) dans une succession alternative ;
(e) la largeur, vue dans le sens périphérique, des aimants permanents (20) est sur le rayon central de la partie de rotor (6) plus grande que radialement à l'extérieur et radialement à l'intérieur sur la partie de rotor (6), et la largeur, vue dans le sens périphérique, des pièces conductrices de flux magnétique (22) est, conformément au rayon central de la partie de rotor (6), plus petite que radialement à l'extérieur et radialement à l'intérieur sur la partie de rotor (6) ;
(f) une première série périphérique de circuits magnétiques, qui passe respectivement - vue dans un plan perpendiculairement à l'axe de rotor (36) - par deux pôles de stator (16) voisins l'un de l'autre de la première partie de stator (2) dans le plan considéré et par deux pièces conductrices de flux magnétique (22) voisines l'une de l'autre de la partie de rotor (6) dans le plan considéré et par l'aimant permanent (20) entre les pièces conductrices de flux magnétique (22) voisines l'une de l'autre dans le plan considéré, et une seconde série périphérique de circuits magnétiques, qui passent respectivement - vue dans un plan perpendiculairement à l'axe du rotor (36) - par deux pôles de stator (16) voisins l'un de l'autre de la seconde partie de stator (10) dans le plan considéré et par deux pièces conductrices de flux magnétique (22) voisines l'une de l'autre de la partie de rotor (6) dans le plan considéré et par l'aimant permanent (20) entre les deux pièces conductrices de flux magnétique (22) voisines l'une de l'autre dans le plan considéré,
**caractérisée en ce que**
(g) les pièces conductrices de flux magnétique (22) et/ou les aimants permanents (20) sont subdivisés en direction de l'axe du rotor (36) en plusieurs parties (20a) isolées électriquement les unes des autres.

2. Machine électrique selon la revendication 1,
**caractérisée en ce que** la largeur citée des pièces conductrices de flux magnétiques (22) radialement à l'intérieur sur la partie de rotor (6) et radialement à l'extérieur sur la partie de rotor (6) est respectivement inférieure à la dimension (26) radiale de la pièce conductrice de flux magnétique (22) concernée.

3. Machine électrique selon la revendication 1 ou 2,
**caractérisée en ce que** la partie de rotor (6) est un composant d'une zone conçue en forme de coupe du rotor (42).

4. Machine électrique selon la revendication 3,
**caractérisée en ce que** la zone, conçue en forme de coupe, du rotor (42) présente une paroi de base de rotor (46), et **en ce que** la partie de rotor (6) est fixée au moyen de tirants d'ancrage (48) répartis sur le pourtour sur la paroi de base (46), les tirants d'ancrage (46) étant fixés d'une part sur la paroi de base (46) et allant d'autre par des alésages dans les pièces conductrices de flux magnétique (22) et/ou dans les aimants permanents (20).

5. Machine électrique selon l'une quelconque des revendications 1 à 4,
**caractérisée en ce que** les parties (20a) des pièces conductrices de flux magnétique (22) et/ou des aimants permanents (20) sont collés entre eux et/ou sont maintenus par des tirants d'ancrage (48).

6. Machine électrique selon l'une quelconque des revendications 1 à 5,
**caractérisée en ce que** les pièces conductrices de flux magnétique (22) et les aimants permanents (20) sont subdivisés en direction de l'axe du rotor (36) en plusieurs parties (20a), qui sont séparées par des bagues intermédiaires (52) à base de matériau non conducteur au plan magnétique.

7. Machine électrique selon la revendication 6,
**caractérisée en ce que** les bagues intermédiaires (52) présentent un diamètre extérieur plus petit que les pièces conductrices de flux magnétique (22) et les aimants permanents (20) et/ou ont un diamètre intérieur plus grand que les pièces conductrices de flux magnétique (22) et les aimants permanents (20).

8. Machine électrique selon l'une quelconque des revendications 1 à 7,
**caractérisée en ce que** la partie de rotor (6) est pourvue côté extérieur d'un bandage de fixation (56) côté périphérique, qui a de préférence une épaisseur de moins de 1,5 mm.

9. Machine électrique selon l'une quelconque des revendications 1 à 8,
**caractérisée en ce que** le nombre des pôles du stator (16) sur la première partie du stator (2) et le nombre des pôles du stator (16) sur la seconde partie du stator (10) sont identiques.

10. Machine électrique selon l'une quelconque des revendications 1 à 9,
**caractérisée en ce qu'**un pôle de stator (16) sur la seconde partie du stator (10) avec une position de phase électromagnétique identique fait face à chaque pôle de stator (16) sur la première partie du stator (2) au-delà de la partie de rotor (6), lorsqu'on se déplace le long d'un rayon vers l'intérieur.

11. Machine électrique selon l'une quelconque des revendications 1 à 10,
**caractérisée en ce que** la première partie du stator (2) et/ou la seconde partie du stator (10) est équipée d'un refroidissement direct par écoulement de fluide le long des enroulements (14).

12. Machine électrique selon l'une quelconque des revendications 1 à 11,
**caractérisée en ce que** la première partie du stator (2) et/ou la seconde partie du stator (10) sont équipées d'un refroidissement de l'arrière du stator (60, 62).

13. Machine électrique selon l'une quelconque des revendications 1 à 12,
**caractérisée en ce que** la première partie du stator (2) et la seconde partie du stator (10) sont fixées sur une paroi de base de stator (34) commune.

14. Machine électrique selon la revendication 13,
**caractérisée en ce qu'**une alimentation en réfrigérant (37) ainsi que des lignes de puissance et de conduite (40) électriques sont placées sur la paroi de base du stator (34).

15. Machine électrique selon l'une quelconque des revendications 1 à 12,
**caractérisée en ce que** la première partie du stator (2) et la seconde partie du stator (10) sont fixées chacune seule sur le composant porteur de la machine.

16. Machine électrique selon l'une quelconque des revendications 1 à 15,
**caractérisée en ce qu'**au moins une électronique d'ondulateur active est raccordée aux enroulements (14) de la machine.
